# EUROPEAN PATENT SPECIFICATION

(11) **EP 4 273 376 B1**
(45) Date of publication and mention of the grant of the patent: **15.04.2026**
(21) Application number: 21914109.0
(22) Date of filing: 23.12.2021
(51) Int. Cl.: F01N 13/00, H01M 8/0662

(54) **BROADBAND MUFFLER FOR FUEL CELL VEHICLE**
BREITBANDSCHALLDÄMPFER FÜR EIN BRENNSTOFFZELLENFAHRZEUG
SILENCIEUX À LARGE BANDE POUR VÉHICULE À PILE À COMBUSTIBLE

(30) Priority: 30.12.2020 CN 202011609137
(43) Date of publication of application: 08.11.2023
(73) Proprietor: MANN+HUMMEL FILTER (SHANGHAI) CO., LTD., 201815 Shanghai (CN)
(72) Inventor: NI, Yimin, Shanghai 201815 (CN); WANG, Kaizhuan, Shanghai 201815 (CN)
(74) Representative: Mann + Hummel Intellectual Property
(86) International application number: PCT/CN2021/140711
(87) International publication number: WO 2022/143372

(56) References cited:
- WO-A1-2009/099399
- CN-A- 103 670 637
- CN-A- 103 670 637
- CN-A- 104 074 585
- CN-U- 206 175 028
- CN-U- 211 422 806
- CN-U- 211 422 806
- CN-U- 215 171 079
- US-A- 4 361 206
- US-A- 4 361 206
- US-A- 4 896 503
- US-A1- 2008 185 218

## Description

### Technical Field

The invention relates to an automobile muffler, in particular to a broadband muffler for a fuel cell vehicle.

### Background

At present, the trend of new energy for passenger cars and the national policy advocacy for new energy vehicles have led major Original Equipment Manufacturers to develop and layout in the field of new energy vehicles. One type of new energy vehicles, a fuel cell vehicle, is currently developing rapidly. The fuel cell releases power to automobiles by taking in fresh air and mixing it and reacting with combustible hydrogen gas. However, during the fuel cell system provides power to the automobiles, both the intake and exhaust ends may generate broadband noise with a certain bandwidth.

At present, the measures taken by various Original Equipment Manufacturers and intake and exhaust system suppliers for this broadband noise are to judge the problematic frequency through a large number of subjective and objective analyses after measuring the noise data, and then to specially design and install a broadband muffler of corresponding band on the intake and exhaust pipes. This method of reducing broadband noise has the disadvantages of slow response, long cycle and high cost.

In addition, because liquid water will be generated at the exhaust end of the fuel cell, the broadband muffler designed for the broadband noise generated by the turbocharger cannot be applied to the exhaust end of the fuel cell vehicle, and the muffler will often fail due to water accumulation.

### Summary

The object of the present invention is to solve the noise attenuation problem of fuel cell vehicles, and provide a broadband muffler for fuel cell vehicles, which integrates water separation structure and ultra-broadband noise attenuation.

The object of the present invention is achieved by the features defining the subject-matter of claim 1.

During operation, an intake end of the first housing of the broadband muffler is connected to an exhaust pipe of a fuel cell stack, and the broadband and high-frequency noise generated by the fuel cell stack enters the broadband muffler, and the noise attenuation structure formed by the inner cannula and the housing will attenuate the noise energy of corresponding band; at the same time, the gaseous/liquid water generated by the chemical reaction of the stack is also transferred into the muffler through a pipe, and part of the water enters the chamber of each noise attenuation structure, and finally flows to the sump due to gravity, and is stored there. In the running state, when the airflow passes through the pipe, pressure difference is formed between the inlet and outlet and the middle position of the Venturi pipe arranged at the end of the inner cannula, and the pressure difference forces the water from the sump into the inner cannula through the drain pipe, and is discharged out along an airflow direction, that is, the water generated by the stack is discharged along the tail pipe while the sound is attenuated.

Further, the sump is a rectangular sump that runs through the entire second housing, and can collect the water that enters each chamber in a concentrated manner, thereby preventing the failure of each chamber of the muffler due to water accumulation;

Further, the second housing is a stepped cylindrical tube, the inner cannula includes a central tube body, and a plurality of annular partitions are arranged on the circumferential wall of the central tube body, and the annular partitions matches with the stepped cylindrical tube, and after the inner cannula is inserted into the second housing, a plurality of noise attenuation chamber structures are formed between the plurality of annular partitions and the second housing.

Further, the noise attenuation chamber structures include one resistive resonant cavity and 2-5 reactive resonant cavities.

Further, a section of the central tube body close to the intake end is provided with several square grooves on the circumferential wall of the central tube body, and sound absorbing cotton is arranged on the outside to form the resistive resonant cavity. The sound absorbing cotton can be quickly replaced to obtain mufflers with different noise attenuation performance. Because actual acoustic performance requirements and cost requirements are different, different acoustic performance and cost requirements can be achieved **by** replacing different sound absorbing cotton; the sound absorbing cotton itself can be waterproof, and will not fail due to the absorption of liquid water. The sound absorbing cotton itself can broaden the acoustic performance of the reactive muffler, and after it is waterproofed, it can be prevented from failing due to water absorption, so the muffler integrated with sound absorbing cotton can be used in fuel cells.

Further, holes are provided on the circumferential wall of the central tube body at remaining positions except for grooves to form a plurality of reactive resonant cavities. The hole size and hole ratio are designed according to actual needs. A Helmholtz muffler can be formed **by** combining circular holes or grooved holes, wall thickness, and cavities, and multiple different axial mufflers in series can be formed.

Further, the first housing includes an outer sleeve, the outer sleeve is in the shape of a bell mouth with a smaller upper end and a larger lower end, and a central intake pipe is arranged inside the outer sleeve, and
an end of the second housing is fastened to an end of the outer sleeve (for example, connected **by** screws or welding); the end of the central intake pipe abuts with the end of the inner cannula.

Further, the lower end of the central intake pipe is longer than the outer sleeve, the lower end of the central intake pipe is in the shape of a bell mouth, the upper end of the inner cannula is in the shape of a bell mouth, and the inner cannula is integrally inserted into the second housing, this structural configuration facilitates sealing and improves the effect of noise attenuation and drainage.

Further, a water separation structure for pre-separating water vapor from upstream is provided in the central intake pipe.

Further, the water separation structure is a plurality of rotating blades, the water vapor coming from the upstream is rotated via the blades, and the water vapor is thrown to the wall surface of the pipe under the action of centrifugal force, and the wall surface of the pipe is provided with spouts. Water is discharged via the spouts.

The broadband muffler integrates drainage and water separation structure, which can meet achieving the function of drainage while reducing noise at the exhaust end of the fuel cell, and meet the use requirements of the exhaust end of the fuel cell vehicle. The broadband muffler for the fuel cell vehicle of the present invention integrates specific sound absorbing cotton noise attenuation capability, and can cover noise frequencies from 1000 Hz to 8000 Hz.

Compared with the prior art, the present invention has the following advantages:
1. A special drainage structure - Venturi pipe is integrated in the muffler, which can realize self-drainage function under the running state of the real vehicle;
2. The square sump provided on the side of the lower housing runs through the entire muffler, which can collect the water entering each chamber in a concentrated manner, so as to prevent the failure of each chamber of the muffler due to water accumulation;
3. The sound absorbing cotton can be quickly replaced to obtain mufflers with different noise-absorbing performance. Because actual acoustic performance requirements and cost requirements are different, different acoustic performance and cost requirements can be achieved by replacing different sound absorbing cotton;
4. The sound absorbing cotton itself can be waterproof, and will not cause the failure of the sound absorbing cotton due to the absorption of liquid water. The sound absorbing cotton itself can broaden the acoustic performance of the reactive muffler. After waterproofing it, it can be prevented from failing due to water absorption. Therefore, the muffler integrated with the sound absorbing cotton can be used in the exhaust system of fuel cell vehicles;
5. The integrated water separation structure of the upper housing can pre-separate the water vapor from the upstream.

### Brief Description of the Drawings

Fig.1 is a structural schematic view of a broadband muffler of the present invention;
Fig.2 is a cross-sectional structural schematic view of the broadband muffler of the present invention;
Fig.3 is a structural schematic view of a first housing;
Fig.4 is a cross-sectional structural schematic view of the first housing;
Fig.5 is a top structural schematic view of the first housing;
Figs.6 and 7 are structural schematic views of a second housing;
Figs.8 and 9 are cross-sectional structural schematic views of an inner cannula;
Figs.10-12 is a front view, a cross-sectional view and a top view of sound absorbing cotton;
Fig.13 is transmission loss test result of the muffler (with sound absorbing cotton 1);
Fig.14 is transmission loss test result of the muffler (with sound absorbing cotton 2).
Fig.15 is a cross-sectional structural schematic view of the broadband muffler of the present invention.

### Detailed Description of Embodiments

The present invention will be described in detail below in conjunction with the accompanying drawings and specific embodiments.

### Embodiment 1

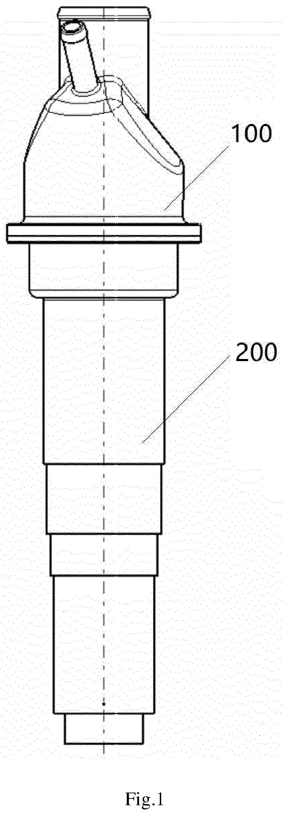

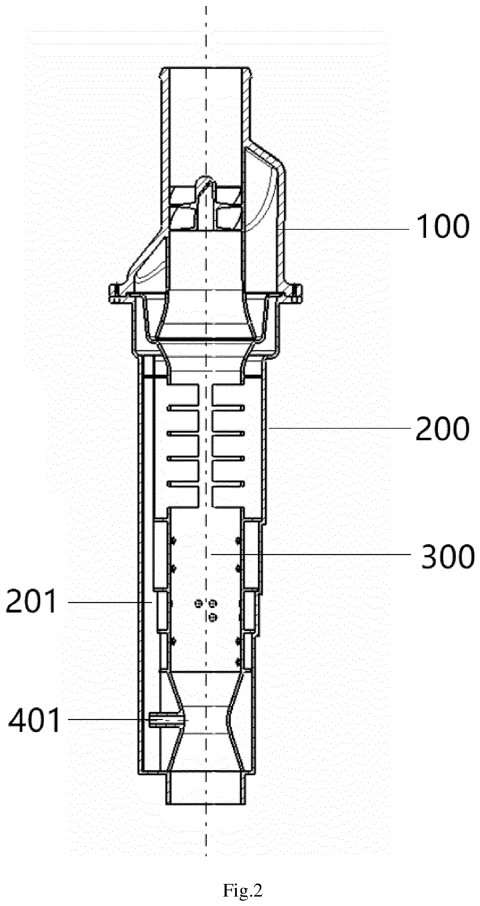

As shown in Figs.1 and 2, a broadband muffler for a fuel cell vehicle includes a first housing 100, a second housing 200, and an inner cannula 300, and the first housing 100 is connected with the second housing 200 to form a sealed cavity, the inner cannula 300 is installed in the sealed cavity formed by the first housing 100 and the second housing 200, and holes or grooves are provided on the inner cannula 300 to form a plurality of noise attenuation structures in the sealed cavity.

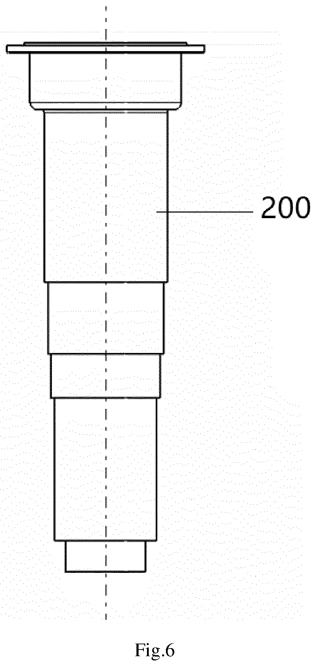

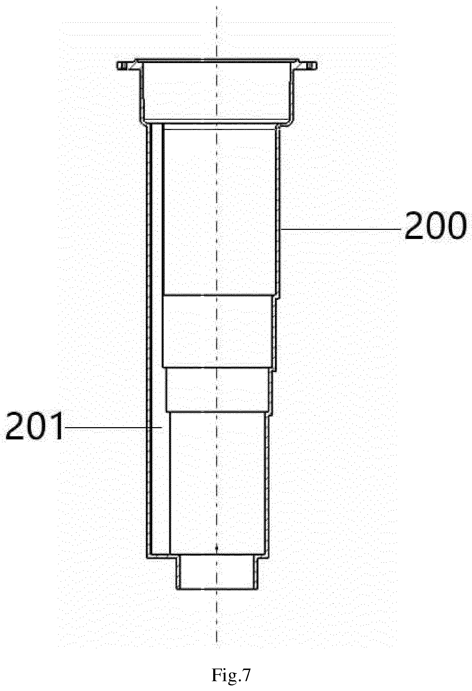

As shown in Figs.6 and 7, the second housing 200 is a stepped cylindrical tube, and the second housing 200 is provided with a sump 201 along its side, the sump 201 is a rectangular sump 201 that runs through the entire second housing 200, and can collect water entering each chamber in a concentrated manner, thereby preventing the failure of each chamber of the muffler due to water accumulation. One end of the exhaust port of the inner cannula 300 is connected to a Venturi pipe 400, and a drain pipe 401 in communication with the sump 201 is provided at a central position of the Venturi pipe 400.

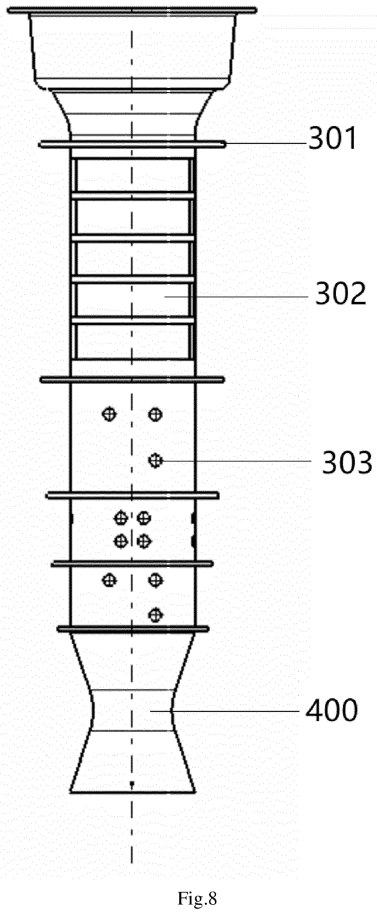

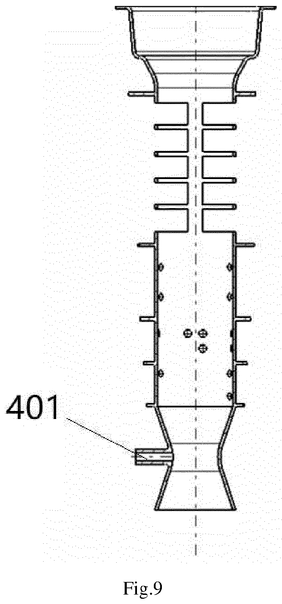

As shown in Figs.8 and 9, the inner cannula 300 includes a central tube body, and a plurality of annular partitions 301 are arranged on the circumferential wall of the central tube body. The annular partitions 301 match with the stepped cylindrical tube. After the inner cannula 300 is inserted into the second housing 200, a plurality of noise attenuation chamber structures are formed between the multiple annular partitions 301 and the second housing 200. The noise attenuation chamber structures include one resistive resonant cavity and a plurality of reactive resonant cavities. A section of the central tube body close to the intake end is provided with several square grooves 302 on the circumferential wall of the central tube body, and sound absorbing cotton 500 is arranged on the outside to form the resistive resonant cavity. The sound absorbing cotton 500 can be quickly replaced to obtain mufflers with different noise attenuation performance.

Because actual acoustic performance requirements and cost requirements are different, different acoustic performance and cost requirements can be achieved by replacing different sound absorbing cotton 500; the sound absorbing cotton 500 itself can be waterproof, and will not fail due to the absorption of liquid water. The sound absorbing cotton 500 itself can broaden the acoustic performance of the reactive muffler, and after it is waterproofed, it can be prevented from failing due to water absorption, so the muffler integrated with sound absorbing cotton 500 can be used in fuel cells.

Holes 303 are provided on the circumferential wall of the central tube body at remaining positions except for grooves to form a plurality of reactive resonant cavities. The hole size and hole ratio are designed according to actual needs. A Helmholtz muffler can be formed by combining circular holes or grooved holes, wall thickness, and cavities, and multiple different axial mufflers in series can be formed.

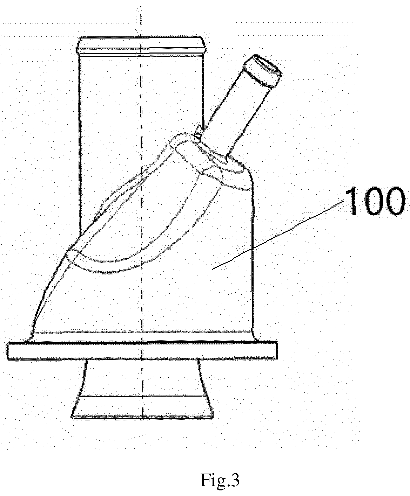

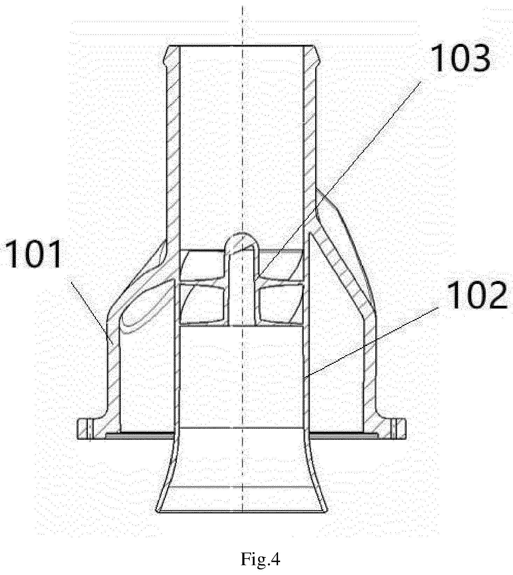

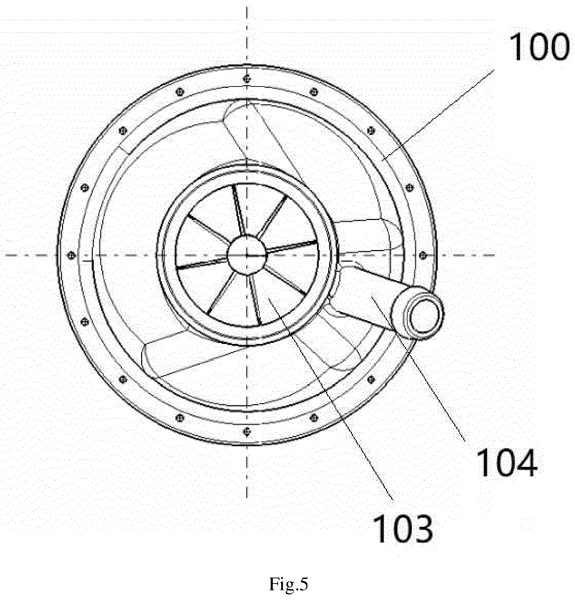

As shown in Fig. 3-5, the first housing 100 includes an outer sleeve 101, which is in the shape of a bell mouth with a smaller upper end and a larger lower end, and a central intake pipe 102 is arranged inside the outer sleeve 101. An end of the second housing 200 is fastened to an end of the outer sleeve 101 (for example, connected by screws or welding); the end of the central intake pipe 102 abuts with the end of the inner cannula 300.

The lower end of the central intake pipe 102 is longer than the outer sleeve 101, the lower end of the central intake pipe 102 is in the shape of a bell mouth, the upper end of the inner cannula 300 is in the shape of a bell mouth, and the inner cannula 300 is integrally inserted into the second housing 200, this structural configuration facilitates sealing and improves the effect of noise attenuation and drainage.

A water separation structure 103 for pre-separating water vapor from upstream is provided in the central intake pipe 102. The water separation structure 103 is a plurality of rotating blades, the water vapor coming from the upstream is rotated via the blades, and the water vapor is thrown to the wall surface of the pipe under the action of centrifugal force, and the wall surface of the pipe is provided with spouts. Water is discharged via the spouts 104.

During operation, an intake end of the first housing 100 of the broadband muffler is connected to an exhaust pipe of a fuel cell stack, and the broadband and high-frequency noise generated by the fuel cell stack enters the broadband muffler, and the noise attenuation structure formed by the inner cannula 300 and the housing will attenuate the noise energy of corresponding band; at the same time, the gaseous/liquid water generated by the chemical reaction of the stack is also transferred into the muffler through a pipe, and part of the water enters the chamber of each noise attenuation structure, and finally flows to the sump 201 due to gravity, and is stored there. In the running state, when the airflow passes through the pipe, pressure difference is formed between the inlet and outlet and the middle position of the Venturi pipe 400 arranged at the end of the inner cannula 300, and the pressure difference forces the water from the sump 201 into the inner cannula 300 through the drain pipe 401, and is discharged out along an airflow direction, that is, the water generated by the stack is discharged along the tail pipe while the sound is attenuated.

### Embodiment 2

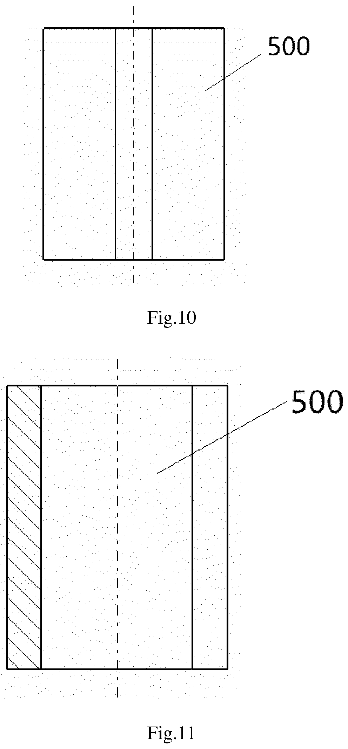

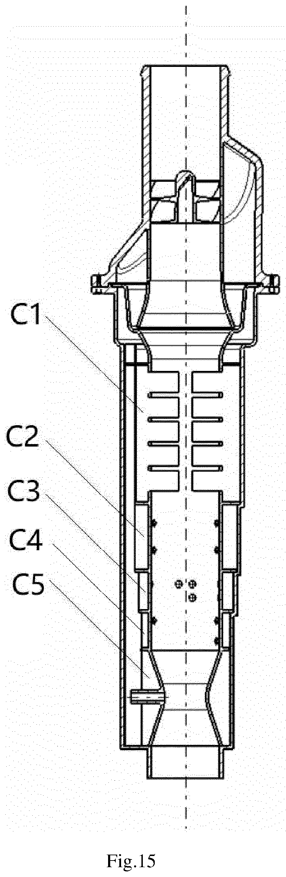

In a specific muffler design, sound absorbing cotton 1 (OX-Pan) and sound absorbing cotton 2 (Basotec G+ from BASF) are integrated in the muffler. The structure of the sound absorbing cotton is shown in Figs.10-12. The specific process parameters of each noise attenuating structure of the muffler are as follows: as shown in Fig.15, the volume of C1 is 0.27L, square holes are provided, and the hole ratio is 0.66, which is used to fill the sound absorbing cotton. The operation range of the sound absorbing cotton is 1000-8000Hz; the volume of C2 is 0.1L, 6 circular holes with a diameter of 5mm are provided, the hole ratio is 0.014, and corresponding noise attenuation frequency is 1000Hz; the volume of C3 is 0.44L, 11 circular holes with a diameter of 5mm are provided, the hole ratio is 0.045, and corresponding noise attenuation frequency is 1120Hz; the volume of C4 is 0.027L, and 5 circular holes with a diameter of 5mm are provided, the hole ratio is 0.022, and corresponding noise attenuation frequency is 1420Hz; the volume of C5 is 0.13L , the cavity is not perforated, and is used to install the Venturi pipe 400 and the drain pipe 401.

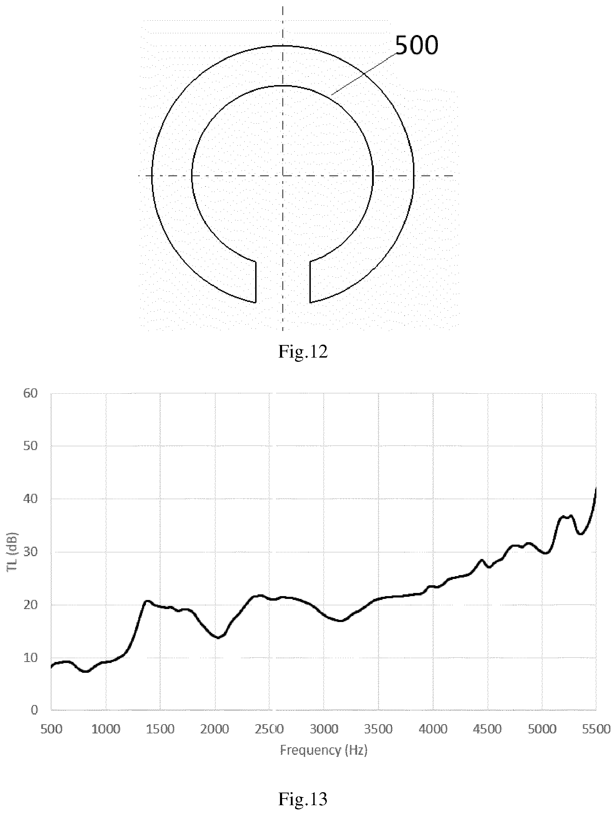

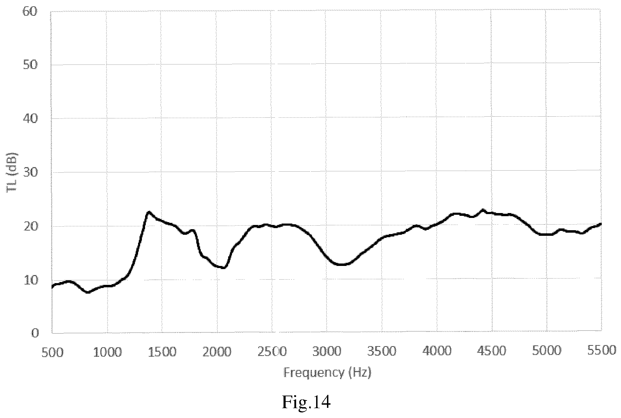

Fig.13 is the transmission loss test result of the muffler with sound absorbing cotton 1; Fig. 14 is the transmission loss test result of the muffler with sound absorbing cotton 2. It can be seen from the two test results that the muffler with sound absorbing cotton 1 can have a transmission loss noise attenuation of almost always more than 20dB in the frequency range of 1300-5500Hz (due to the cut-off frequency of the plane wave, the test can only display to 5500Hz); the muffler with the sound absorbing cotton 2 can have a transmission loss noise attenuation of almost always more than 15dB in the frequency range of 1300-5500Hz (due to the cut-off frequency of the plane wave, the test can only display to 5500Hz).

The above descriptions of the embodiments enable those skilled in the art to understand and utilize the invention. It is obvious that those skilled in the art can easily make various modifications to these embodiments, and apply the general principles described herein to other embodiments without creative effort. Therefore, the present invention is not limited to the above-mentioned embodiments.

## Claims

1. A broadband muffler for a fuel cell vehicle, the broadband muffler comprising:
a first housing (100);
a second housing (200) connected to the first housing (100) to form a sealed cavity;
an inner cannula (300) disposed in the sealed cavity and dividing the sealed cavity into chambers, the inner cannula (300) comprising square grooves (302) through a surface of the inner cannula (300) in a first one of the chambers, the inner cannula (300) further comprising circular holes (303) through the surface of the inner cannula (300) in a different one of the chambers, and the square grooves (302) and the circular holes (303) being for reducing noise;
a sump (201) disposed inside the second housing (200) along a side of the second housing (200) and configured to collect water from each of the chambers;
a venturi pipe (400) connected to an exhaust port of the inner cannula (300); and
a drainage tube (401) disposed at a center of the venturi pipe (400) and connected to the sump (201).

2. The broadband muffler of claim 1, wherein the sump (201) extends along an inner side surface of the second housing (200).

3. The broadband muffler of claim 1, wherein the second housing (200) is a stepped cylindrical tube, and
the inner cannula (300) comprises a central tube body and annular partitions (301) disposed on a circumferential wall of the central tube body, the annular partitions (301) being respectively arranged at steps of the stepped cylindrical tube and forming the chambers between the annular partitions (301).

4. The broadband muffler of claim 1, wherein the inner cannula (300) comprises the circular holes (303) through the surface of the inner cannula (300) in 2-5 of the chambers.

5. The broadband muffler of claim 1, further comprising sound absorbing cotton (500) disposed on and/or over an outside of each of the square grooves (302) through the surface of the inner cannula (300) in the first one of the chambers, to form a resistive resonant cavity.

6. The broadband muffler of claim 1, wherein the circular holes (303) through the surface of the inner cannula (300) in the different one of the chambers form resistant resonant cavities.

7. The broadband muffler of claim 1, wherein the first housing (100) comprises:
an outer sleeve (101) in a shape of a bell mouth with a smaller upper end and a larger lower end, and connected to an end of the second housing (200); and
a central intake pipe (102) opposite to an output end of the inner cannula (300).

8. The broadband muffler of claim 7, wherein a lower end of the central intake pipe (102) is longer than the outer sleeve (101),
the lower end of the central intake pipe (102) is in a shape of a bell mouth, and
an upper end of the inner cannula (300) is in a shape of a bell mouth, on which the lower end of the central intake pipe (102) is disposed.

9. The broadband muffler of claim 7, wherein the first housing (100) further comprises a water separation structure (103) for pre-separating water vapor from upstream air, and disposed in the central intake pipe (102).

10. The broadband muffler of claim 9, wherein the water separation structure (103) comprises blades arranged in rotation.

11. The broadband muffler of claim 1, wherein the square grooves (302) through the surface of the inner cannula (300) in the first one of the chambers are disposed adjacent to an intake end of the inner cannula (300).

## Patentansprüche

1. Breitbandschalldämpfer für ein Brennstoffzellenfahrzeug,
wobei der Breitbandschalldämpfer Folgendes umfasst:
ein erstes Gehäuse (100);
ein zweites Gehäuse (200), das mit dem ersten Gehäuse (100) verbunden ist, um einen abgedichteten Hohlraum zu bilden;
eine innere Kanüle (300), die in dem abgedichteten Hohlraum angeordnet ist und den abgedichteten Hohlraum in Kammern unterteilt, wobei die innere Kanüle (300) quadratische Nuten (302) durch eine Oberfläche der inneren Kanüle (300) in einer ersten der Kammern umfasst, wobei die innere Kanüle (300) ferner kreisförmige Löcher (303) durch die Oberfläche der inneren Kanüle (300) in einer anderen der Kammern umfasst, und wobei die quadratischen Nuten (302) und die kreisförmigen Löcher (303) der Geräuschreduzierung dienen;
einen Sammelbehälter (201), der innerhalb des zweiten Gehäuses (200) entlang einer Seite des zweiten Gehäuses (200) angeordnet und so konfiguriert ist, dass er Wasser aus jeder der Kammern sammelt;
ein Venturirohr (400), das mit einer Absaugöffnung der inneren Kanüle (300) verbunden ist; und
ein Drainagerohr (401), das in einer Mitte des Venturirohrs (400) angeordnet und mit dem Sammelbehälter (201) verbunden ist.

2. Breitbandschalldämpfer nach Anspruch 1, wobei sich der Sammelbehälter (201) entlang einer Innenseite des zweiten Gehäuses (200) erstreckt.

3. Breitbandschalldämpfer nach Anspruch 1, wobei das zweite Gehäuse (200) ein abgestuftes zylindrisches Rohr ist, und
die innere Kanüle (300) einen zentralen Rohrkörper und ringförmige Trennwände (301) umfasst, die an einer Umfangswand des zentralen Rohrkörpers angeordnet sind, wobei die ringförmigen Trennwände (301) jeweils an Stufen des abgestuften zylindrischen Rohrs angeordnet sind und die Kammern zwischen den ringförmigen Trennwänden (301) bilden.

4. Breitbandschalldämpfer nach Anspruch 1, wobei die innere Kanüle (300) in 2 bis 5 der Kammern kreisförmige Löcher (303) durch die Oberfläche der inneren Kanüle (300) umfasst.

5. Breitbandschalldämpfer nach Anspruch 1, ferner schalldämmende Baumwolle (500) umfassend, die auf und/oder über einer Außenseite jeder der quadratischen Nuten (302) durch die Oberfläche der inneren Kanüle (300) in der ersten der Kammern angeordnet ist, um einen widerstandsfähigen Resonanzhohlraum zu bilden.

6. Der Breitbandschalldämpfer nach Anspruch 1, wobei die kreisförmigen Löcher (303) durch die Oberfläche der inneren Kanüle (300) in der anderen Kammer widerstandsfähige Resonanzhohlräume bilden.

7. Breitbandschalldämpfer nach Anspruch 1, wobei das erste Gehäuse (100) umfasst:
eine Außenhülse (101) in Form einer Aufweitung mit einem kleineren oberen Ende und einem größeren unteren Ende, die mit einem Ende des zweiten Gehäuses (200) verbunden ist; und
ein zentrales Ansaugrohr (102) gegenüber einer Ausgabeseite der inneren Kanüle (300).

8. Breitbandschalldämpfer nach Anspruch 7, wobei ein unteres Ende des zentralen Ansaugrohrs (102) länger ist als die Außenhülse (101),
das untere Ende des zentralen Ansaugrohrs (102) die Form einer Aufweitung aufweist und
ein oberes Ende der inneren Kanüle (300) die Form einer Aufweitung aufweist, auf der das untere Ende des zentralen Ansaugrohrs (102) angeordnet ist.

9. Breitbandschalldämpfer nach Anspruch 7, wobei das erste Gehäuse (100) ferner eine Wasserabscheidestruktur (103) zum Vorabscheiden von Wasserdampf aus der stromaufwärts gerichteten Luft umfasst und im zentralen Ansaugrohr (102) angeordnet ist.

10. Breitbandschalldämpfer nach Anspruch 9, wobei die Wasserabscheidestruktur (103) rotierend angeordnete Flügel umfasst.

11. Breitbandschalldämpfer nach Anspruch 1, wobei die quadratischen Nuten (302) durch die Oberfläche der inneren Kanüle (300) in der ersten der Kammern benachbart zu einem Einlassende der inneren Kanüle (300) angeordnet sind.

## Revendications

1. Silencieux à large bande pour véhicule à pile à combustible, le silencieux à large bande comprenant:
un premier boîtier (100);
un deuxième boîtier (200) relié au premier boîtier (100) pour former une cavité étanche;
une canule interne (300) disposée dans la cavité étanche et divisant la cavité étanche en chambres, la canule interne (300) comprenant des rainures carrées (302) à travers une surface de la canule interne (300) dans une première des chambres, la canule interne (300) comprenant en outre des trous circulaires (303) à travers la surface de la canule interne (300) dans une autre des chambres, et les rainures carrées (302) et les trous circulaires (303) servant à réduire le bruit;
un puisard (201) disposé à l'intérieur du deuxième boîtier (200) le long d'un côté du deuxième boîtier (200) et configuré pour collecter l'eau provenant de chacune des chambres;
un tuyau de venturi (400) relié à un orifice d'échappement de la canule interne (300); et
un tube de drainage (401) disposé au centre du tuyau de venturi (400) et relié au puisard (201).

2. Silencieux à large bande selon la revendication 1, dans lequel le puisard (201) s'étend le long d'une surface latérale intérieure du deuxième boîtier (200).

3. Silencieux à large bande selon la revendication 1, dans lequel le deuxième boîtier (200) est un tube de forme cylindrique à gradins, et
la canule interne (300) comprend un corps de tube central et des cloisons annulaires (301) disposées sur une paroi circonférentielle du corps de tube central, les cloisons annulaires (301) étant respectivement agencées au niveau des gradins du tube de forme cylindrique à gradins et formant les chambres entre les cloisons annulaires (301).

4. Silencieux à large bande selon la revendication 1, dans lequel la canule interne (300) comprend des trous circulaires (303) traversant la surface de la canule interne (300) dans 2 à 5 des chambres.

5. Silencieux à large bande selon la revendication 1, comprenant en outre du coton insonorisant (500) disposé sur et/ou au-dessus d'une partie extérieure de chacune des rainures carrées (302) à travers la surface de la canule interne (300) dans la première des chambres, afin de former une cavité résonante résistive.

6. Silencieux à large bande selon la revendication 1, dans lequel les trous circulaires (303) traversant la surface de la canule interne (300) dans la différente des chambre forment des cavités résonnantes résistives.

7. Silencieux à large bande selon la revendication 1, dans lequel le premier boîtier (100) comprend:
un manchon extérieur (101) en forme d'embouchure de cloche avec une extrémité supérieure plus petite et une extrémité inférieure plus grande, et relié à une extrémité du deuxième boîtier (200); et
un tuyau d'admission central (102) opposé à une extrémité de sortie de la canule interne (300).

8. Silencieux à large bande selon la revendication 7, dans lequel une extrémité inférieure du tuyau d'admission central (102) est plus longue que le manchon extérieur (101),
l'extrémité inférieure du tuyau d'admission central (102) a la forme d'une embouchure de cloche, et
une extrémité supérieure de la canule interne (300) a la forme d'une embouchure de cloche, sur lequel est disposée l'extrémité inférieure du tuyau d'admission central (102).

9. Silencieux à large bande selon la revendication 7, dans lequel le premier boîtier (100) comprend en outre une structure de séparation d'eau (103) pour pré-séparer la vapeur d'eau de l'air amont, et disposée dans le tuyau d'admission central (102).

10. Silencieux à large bande selon la revendication 9, dans lequel la structure de séparation d'eau (103) comprend des lames disposées en rotation.

11. Silencieux à large bande selon la revendication 1, dans lequel les rainures carrées (302) traversant la surface de la canule interne (300) dans la première des chambres sont disposées à proximité d'une extrémité d'admission de la canule interne (300).
